# EUROPEAN PATENT APPLICATION

(11) **EP 2 565 793 A1**
(43) Date of publication of application: **06.03.2013**
(21) Application number: 11774429.2
(22) Date of filing: 03.05.2011
(51) Int. Cl.: G06F 12/14

(54) **SECURE DATA STORAGE AND TRANSFER FOR PORTABLE DATA STORAGE DEVICES**

(30) Priority: 30.04.2010 US 771581
(71) Applicant: Gsimedia Corporation, Cayman Islands, B.W. I. (KY)
(72) Inventor: LIN, Hui, Taipei Taiwan 114 (CN)
(74) Representative: Viering, Jentschura & Partner
(86) International application number: PCT/CN2011/073616
(87) International publication number: WO 2011/134438

(57) **Abstract**

Embodiments of system and method for protection of data in a portable data storage device are provided. In one aspect, a portable data storage device includes a first portable storage identification (PSID) parameter unique to the portable data storage device, one or more data storage media in which the first PSID parameter is stored, and control logic coupled to the one or more data storage media. The one or more data storage media include a data file section to store therein a data file, which includes data and a rights object. The rights object contains a second PSID parameter. The control logic controls access to the one or more data storage media by a user of the portable data storage device. The control logic determines whether or not the first PSID parameter and the second PSID parameter are equal and, if the first PSID parameter and the second PSID parameter are equal, causes the data in the data file to be provided to the user in response to a request for the data from the user.

## Description

### BACKGROUND

With the advancement in information technology, various forms of information can be recorded, stored and transferred in digital format as digital data. For example, audio, video and textual information such as songs, speeches, movies, literature and the like can be recorded and stored as digital data content on portable data storage media such as compact disc (CD), digital video disc (DVD) and memory cards. Among the various types of memory cards currently available on the market, Secure Digital (SD) cards are a type of memory cards that are widely used in portable devices such as digital cameras, digital camcorders, handheld computers, media players, mobile phones, personal entertainment devices, etc.

As digital data can nowadays be easily uploaded and downloaded via the Internet, the protection of copyright and other intellectual property rights is a concern of many, especially those who created and/or own the rights in the digital data under concern. In that regard, various access control technologies, such as digital rights management (DRM), have been developed for hardware manufacturers, publishers, copyright holders and individuals to impose limitations on the usage of digital data and related equipment. Typically, DRM can be used to provide security in paid-for digital data that is downloaded by a user through a network without the user fearing the downloaded data being duplicated or distributed illegally. DRM can also be used to limit the number of times of access and the number of allowable duplications, for example, with respect to certain digital data. However, existing DRM technologies do not provide data security for data stored on portable data storage devices.

### SUMMARY

In one aspect, a portable data storage device includes a first portable storage identification (PSID) parameter unique to the portable data storage device, one or more data storage media in which the first PSID parameter is stored, a communication port, and control logic communicatively coupled to the communication port and the one or more data storage media. The one or more data storage media include a data file section to store therein a data file, which includes data and a rights object. The rights object contains a second PSID parameter. The control logic controls access to the one or more data storage media through the communication port by a user of the portable data storage device. The control logic determines whether or not the first PSID parameter and the second PSID parameter are equal and, if the first PSID parameter and the second PSID parameter are equal, causes the data in the data file to be provided to the user in response to a request for the data from the user.

The one or more data storage media may include at least a memory serial number that is unique to the one or more data storage media, and the first PSID parameter may comprise an PSID parameter generated from the memory serial number, a random number generated by a true random number generator, or a combination thereof.

At least one of the first PSID parameter or the second PSID parameter may be encrypted. The control logic may decrypt the first PSID parameter, the second PSID parameter, or both the first and the second PSID parameters before determining whether or not the first PSID parameter and the second PSID parameter are equal.

The control logic may encrypt data before the data is provided to the user and decrypt new data to be stored in the one or more data storage media before storing the new data in the one or more data storage media. The control logic may encrypt and decrypt based on the Public Key Infrastructure (PKI) using a 1024-bit key. Alternatively, the control logic may encrypt and decrypt based on the Advanced Encryption Standard (AES).

The one or more data storage media may further include a protection section that stores one or more instruction codes and a partition table section that stores a partition table. The first PSID parameter may be stored in the protection section, the partition table section, or the data file section. Alternatively, the one or more data storage media may further include a control logic section that stores the control logic, and the first PSID parameter may be stored in the control logic section.

In another aspect, a method for protecting data stored in a portable data storage device receives a request from a user for data contained in a data file that is stored in one of one or more data storage media of the portable data storage device. It is determined whether or not a first PSID parameter stored in one of the one or more data storage media and a second PSID parameter contained in a rights object associated with the data file are equal. If it is determined that the first PSID parameter and the second PSID parameter are equal, the data in the data file is provided to the user.

At least one of the first PSID parameter or the second PSID parameter may be encrypted, and the first PSID parameter, the second PSID parameter, or both the first and the second PSID parameters are decrypted before it is determined whether or not the first PSID parameter and the second PSID parameter are equal.

The method may further encrypt the data contained in the data file with the PKI using a 1024-bit key before providing the data to the user. Alternatively, the method may further encrypt the data contained in the data file with the Advanced Encryption Standard (AES) before providing the data to the user.

When the one or more data storage media include a protection section that stores one or more instruction codes, a partition table section that stores a partition table, a data file section that stores the data file, and a control logic section that stores a control logic which controls operations of the portable data storage device, the method may store the first PSID parameter in the control logic section.

In yet another aspect, a method for protecting data stored in a portable data storage device generates a first PSID parameter that is unique to the portable data storage device. The first PSID parameter is stored in one of one or more data storage media of the portable data storage device. A data file is stored in one of the one or more data storage media in response to a request for data in the data file from a user of the portable data storage device. The data file includes data and a rights object that contains a second PSID parameter. The second PSID parameter is generated based on the first PSID parameter such that the data in the data file cannot be accessed unless the second PSID parameter matches the first PSID parameter.

The first PSID parameter may be generated using a memory serial number that is unique to the one of one or more data storage media, a random number generated by a true random number generator, or a combination thereof.

When storing the data file in the one of the one or more data storage media, the data file may be encrypted with the PKI using a 1024-bit key before transferring the data file to the portable data storage device. Alternatively, when storing the data file in the one of the one or more data storage media, the data file may be encrypted with the AES before transferring the data file to the portable data storage device.

The method may further store a correlation between the first PSID parameter and at least one of a device serial number that is unique to the portable data storage device or the memory serial number in a database. The rights object may be generated in response to the request for the data file by locating the first PSID parameter in the database using at least one of the device serial number or the memory serial number, and including the first PSID parameter in the rights object as the second PSID parameter.

This summary is provided to introduce concepts relating to secure data storage and transfer for portable data storage devices. These techniques are further described below in the detailed description. This summary is not intended to identify essential features of the claimed subject matter, nor is it intended for use in determining the scope of the claimed subject matter.

### BRIEF DESCRIPTION OF THE DRAWINGS

The detailed description is described with reference to the accompanying figures. In the figures, the left-most digit(s) of a reference number identifies the figure in which the reference number first appears. The same reference numbers in different figures indicate similar or identical items.

Figure 1 illustrates a portable data storage device in accordance with the present disclosure.

Figure 2 illustrates another portable data storage device in accordance with the present disclosure.

Figure 3 illustrates a time diagram of a scheme for secure data storage and transfer for portable data storage devices in accordance with the present disclosure.

Figure 4 illustrates a process for protecting data stored in a portable data storage device in accordance with the present disclosure.

Figure 5 illustrates another process for protecting data stored in a portable data storage device in accordance with the present disclosure.

### DETAILED DESCRIPTION

### Overview

The present disclosure describes techniques for secure data storage and transfer for portable data storage devices. By storing in a portable data storage device a first PSID parameter that is unique to the portable data storage device and requiring data of a data file to be accessible only when a second PSID parameter associated with the data file is equal to the first PSID parameter, the concern regarding data security for data stored on portable data storage devices is believed to be addressed. Moreover, by encrypting data transferred between a portable data storage device and an external agent, the secure transfer of data is provided.

While aspects of described techniques relating to secure data storage and transfer for portable data storage devices can be implemented in any number of different forms of portable data storage devices, environments, and/or configurations, embodiments are described in context of the following exemplary system architecture(s).

### Illustrative First Portable Data Storage Device

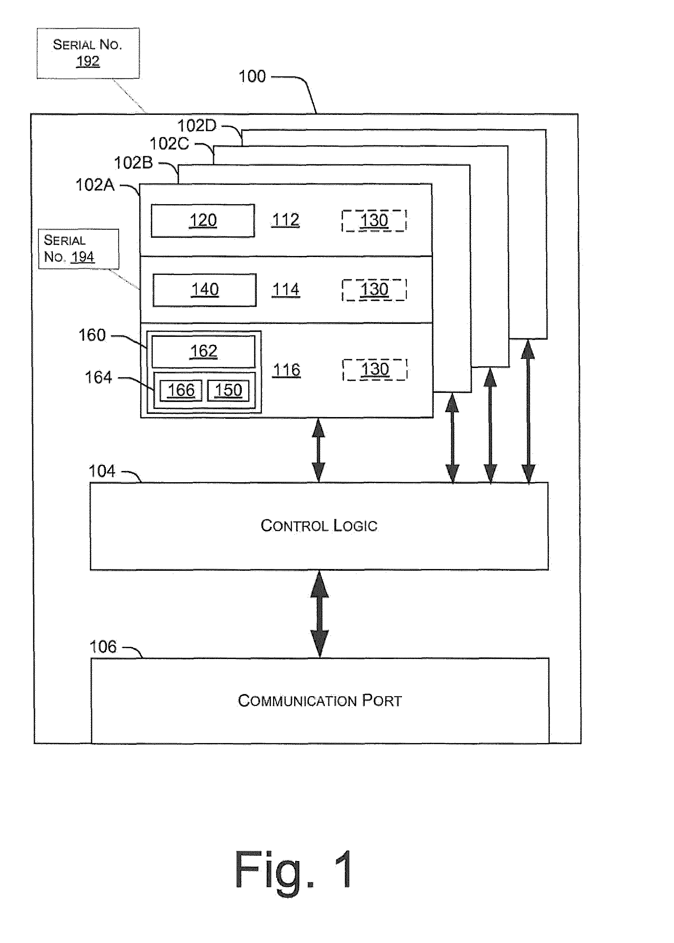

Figure 1 illustrates a portable data storage device 100 in accordance with the present disclosure. The portable data storage device 100 includes a first portable storage identification (PSID) parameter 130, one or more data storage media 102A-D, control logic 104, and a communication port 106.

The one or more data storage media 102A-D are memories and, in one embodiment, are flash memories. Alternatively, the one or more data storage media 102A-D are electrically-erasable programmable read-only memories (EEPROM). Although there are four data storage media 102A-D shown in Figure 1, in one embodiment, there is only one data storage medium. In other embodiments, the number of data storage media in the portable data storage device 100 is greater or less than four. Each of the one or more data storage media 102A-D has a unique memory serial number provided by the manufacturer of the data storage media 102A-D. In Figure 1, only the memory serial number 194 of the data storage medium 102A is shown. Likewise, the portable data storage device 100 may optionally have a unique device serial number 192 provided by the manufacturer of the portable data storage device 100. The description below pertaining to the data storage medium 102A is intended to be applicable to the other data storage media 102B-D unless otherwise specified.

The data storage medium 102A includes a number of sections, the protection section 112, the partition table section 114, and the data file section 116, each of which serves a respective function. The protection section 112 is mainly used to store one or more instruction codes 120, for the operation of the portable data storage device 100 for example. The partition table section 114 is mainly used to store a partition table 140. The data file section 116 is mainly used to store data files such as data file 160.

The first PSID parameter 130 is unique to the portable data storage device 100 and may be used as the identification of the portable data storage device 100. In one embodiment, the first PSID parameter 130 is generated using the memory serial number 194. In another embodiment, the first PSID parameter 130 is generated using a random number generated by a true random number generator. In yet another embodiment, the first PSID parameter 130 is generated using both of the memory serial number 194 and the random number. The generation of the first PSID parameter 130 will be described in more detail below.

The first PSID parameter 130 is stored in one of the sections of the data storage medium 102A. In one embodiment, the first PSID parameter 130 is stored in the protection section 112. In another embodiment, the first PSID parameter 130 is stored in the partition table section 114. In yet another embodiment, the first PSID parameter 130 is stored in the data file section 116. Because the first PSID parameter 130 is stored in one of the sections of the data storage medium 102A, the first PSID parameter 130 is shown in dotted lines in each of those sections in Figure 1.

The data file 160 includes data content, or simply data 162, and a rights object 164. The rights object 164 contains information 166 that describes the access rights with respect to the data 162. For example, the information 166 may describe the duration that the data 162 is available to be accessed, the number of times the data 162 is allowed to be accessed, etc. The rights object 164 also contains a second PSID parameter 150. The second PSID parameter 150 is set to be equal to the first PSID parameter 130 when the data file 160 is downloaded to the portable data storage device 100 to be stored in the data storage medium 102A.

When a user requests to access the data 162, the first PSID parameter 130 and the second PSID parameter 150 are compared. If the first PSID parameter 130 and the second PSID parameter 150 equal to each other, then the user is allowed to access the data 162. However, if the first PSID parameter 130 and the second PSID parameter 150 do not equal to each other, then access to the data 162 is denied. Therefore, when the data file 160 is copied to another portable data storage device (not shown), which has a respective PSID parameter stored therein but different from the first PSID parameter 130, the data 162 cannot be accessed by a user of that particular portable data storage device because its respective PSID parameter and the second PSID parameter 150 in the data file 160 are different. This is because each PSID parameter is unique to its respective portable data storage device.

The communication port 106 is a data input/output interface of the portable data storage device 100. Construction and operation of the communication port 106 are well-known in the art. Thus, in the interest of brevity, a detailed description of the communication port 106 will not be provided.

The control logic 104 controls access to the one or more data storage media 102A-D through the communication port 106 by a user of the portable data storage device 100. The control logic 104 determines whether or not the first PSID parameter 130 and the second PSID parameter 150 are equal and, if the first PSID parameter 130 and the second PSID parameter 150 are equal, causes the data in the data file to be provided to the user in response to a request for the data from the user.

In one embodiment, at least one of the first PSID parameter 130 or the second PSID parameter 150 is encrypted. The control logic 104 decrypts the first PSID parameter 130, the second PSID parameter 150, or both the first and the second PSID parameters 130 and 150 before determining whether or not the first PSID parameter 130 and the second PSID parameter 150 are equal.

In one embodiment, the control logic 104 encrypts data before the data is provided to the user and decrypts new data to be stored in the one or more data storage media 102A-D before storing the new data in the one or more data storage media 102A-D. The control logic 104 encrypts and decrypts based on the PKI using a 1024-bit key. Alternatively, the control logic 104 encrypts and decrypts based on the AES.

### Illustrative Second Portable Data Storage Device

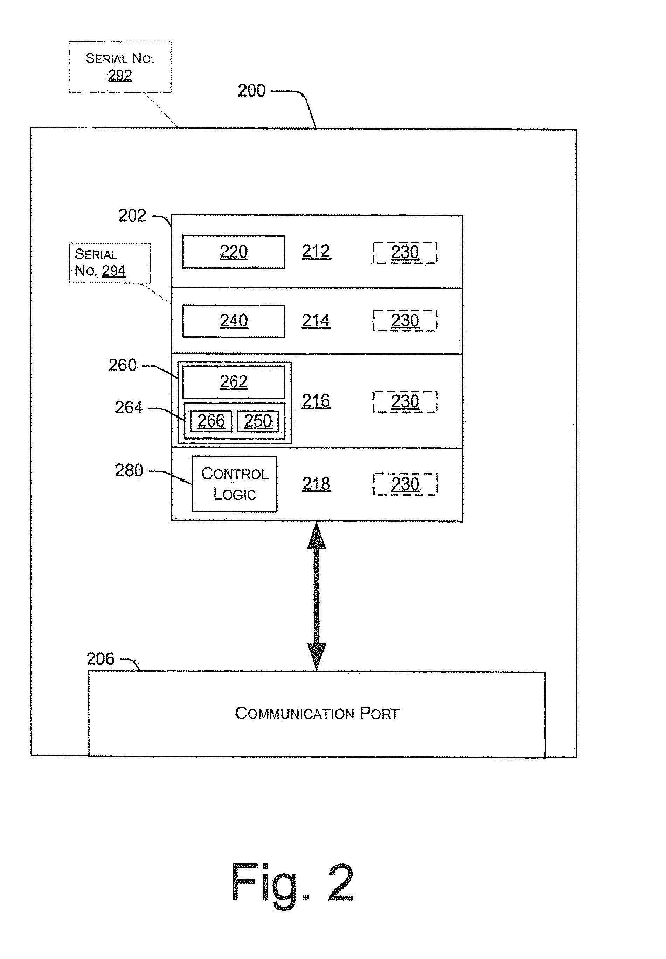

Figure 2 illustrates a portable data storage device 200 in accordance with the present disclosure. The portable data storage device 200 includes a first PSID parameter 230, a data storage medium 202, control logic 280, and a communication port 206. Certain aspects of the portable data storage device 200 are either the same as or similar to that of the portable data storage device 100. Accordingly, in the interest of brevity, a detailed description with respect to those aspects of the portable data storage device 200 will not be repeated.

Although only one data storage medium 202 is shown in Figure 2, in other embodiments the portable data storage device 200 includes more than one data storage medium. The data storage medium 202 has a memory serial number 294 that is unique to the data storage medium 202. Likewise, the portable data storage device 200 may optionally have a unique device serial number 292.

The data storage medium 202 includes a number of sections, namely the protection section 212, the partition table section 214, the data file section 216, and the control logic section 218. The protection section 212 is mainly used to store one or more instruction codes 220, for the operation of the portable data storage device 200 for example. The partition table section 214 is mainly used to store a partition table 240. The data file section 216 is mainly used to store data files such as data file 260. The control logic section 218 is mainly used to store the control logic 280.

The first PSID parameter 230 is unique to the portable data storage device 200. In one embodiment, the first PSID parameter 230 is generated using the memory serial number 294. In another embodiment, the first PSID parameter 230 is generated using a random number generated by a true random number generator. In yet another embodiment, the first PSID parameter 230 is generated using both of the memory serial number 294 and the random number. The generation of the first PSID parameter 230 will be described in more detail below.

The first PSID parameter 230 is stored in one of the sections of the data storage medium 202. In one embodiment, the first PSID parameter 230 is stored in the protection section 212. In another embodiment, the first PSID parameter 230 is stored in the partition table section 214. In yet another embodiment, the first PSID parameter 230 is stored in the data file section 216. In still another embodiment, the first PSID parameter 230 is stored in the control logic section 218. Because the first PSID parameter 230 is stored in one of the sections of the data storage medium 202, the first PSID parameter 230 is shown in dotted lines in each of those sections in Figure 2.

The data file 260 includes data content, or simply data 262, and a rights object 264. The rights object 264 contains information 266 that describes the access rights with respect to the data 262. The rights object 264 also contains a second PSID parameter 250. The second PSID parameter 250 is set to be equal to the first PSID parameter 230 when the data file 260 is downloaded to the portable data storage device 200 to be stored in the data storage medium 202.

### Illustrative Scheme of Secure Data Storage and Transfer

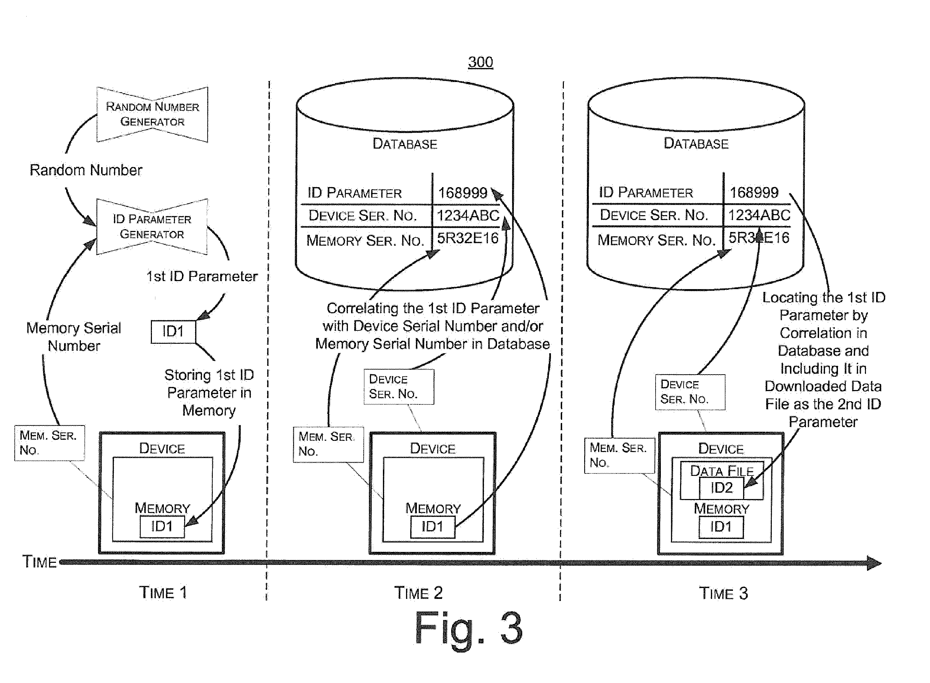

Figure 3 illustrates a time diagram of a scheme 300 for secure data storage and transfer for portable data storage devices in accordance with the present disclosure.

During the initial stage, labeled as Time 1 in Figure 3, a first identification parameter is generated and stored in a portable data storage device, such as an SD memory card for example, that has one or more data storage media, or memories, such as flash memories for example. The first identification parameter may be generated using a memory serial number that is unique to the one of one or more data storage media, a random number generated by a true random number generator, or both of the memory serial number and the random number.

For example, given that each memory in the portable data storage device is associated with a unique serial number provided by the memory vendor, such as a flash memory unique device ID, the first identification parameter can be generated from the serial number of the memory or one of several memories of the portable data storage device. If there are more than one memories in the portable data storage device, then the serial number of one of the memories is selected for the generation of the first identification parameter. The value of the first identification parameter can be equated to, or mathematically derived from, the selected memory serial number.

Additionally or alternatively, a true random generator in the control logic 104 may be used to generate a true random number. The true random number alone may be used to generate the first identification parameter. This can be done by equating the value of the first identification parameter to, or mathematically deriving the value of the first identification parameter from, the true random number. Given the randomness in the generated random number, the random number, and hence the first identification parameter generated from the random number, is unique to the respective portable data storage device for which it is generated.

To further enhance the uniqueness of the first identification parameter with respect to the portable data storage device, the first identification parameter is generated from either or both the true random number and the selected memory serial number, and then stored in the control logic of the portable data storage device using a one-time programming mechanism. The first identification parameter may then be used as the identification of the portable data storage device. This can be done by equating the value of the first identification parameter to, or mathematically deriving the value of the first identification parameter from, a concatenation or mathematical derivation from of combination of either or both of the selected memory serial number and the true random number.

The one or more memories of the portable data storage device may have a control logic section where the control logic is stored, a protection section, a partition table section, and a data file section. In various embodiments, the first identification parameter may be stored in any, some o all of the control logic section, a system area of the control logic section, the protection section, the partition table section, or the data file section.

During the second stage, labeled as Time 2 in Figure 3, the first identification parameter is stored in a database. In particular, the correlation between the first identification parameter and a memory serial number of one of the one or more data storage media that is unique to the respective data storage medium, a serial number of the portable data storage device, or both, is stored in the database. For example, a lookup table correlating the first identification parameter, the memory serial number and/or the portable data storage device serial number can be used. This allows the first identification parameter to be looked up by searching the corresponding memory serial number and/or portable data storage device serial number.

Although Figure 3 illustrates both of the memory serial number and the portable data storage device serial number being correlated to the first identification parameter, in various embodiments only one of the memory serial number and the portable data storage device serial number is utilized and stored in the database along with the first identification parameter.

During the third stage, labeled as Time 3 in Figure 3, a data file is stored in, or downloaded to, the portable data storage device. Other than data, such as audio, video or textual data, the data file also includes a rights object that defines the access rights with respect to the data. In addition, the rights object contains a second identification parameter that is equal to the first identification parameter if the data file is obtained through an authorized vendor and via legitimate means, such as through purchase for example.

When it is indicated that the data file is to be downloaded to the portable data storage device, the first identification parameter is looked up from the database using either or both of the memory serial number and the portable data storage device serial number. Once found, the first identification parameter is included in the rights object of the data file as the second identification parameter. This serves as a mechanism to ensure that only data of the data files intended for the portable data storage device can be accessed.

### Illustrative Operations

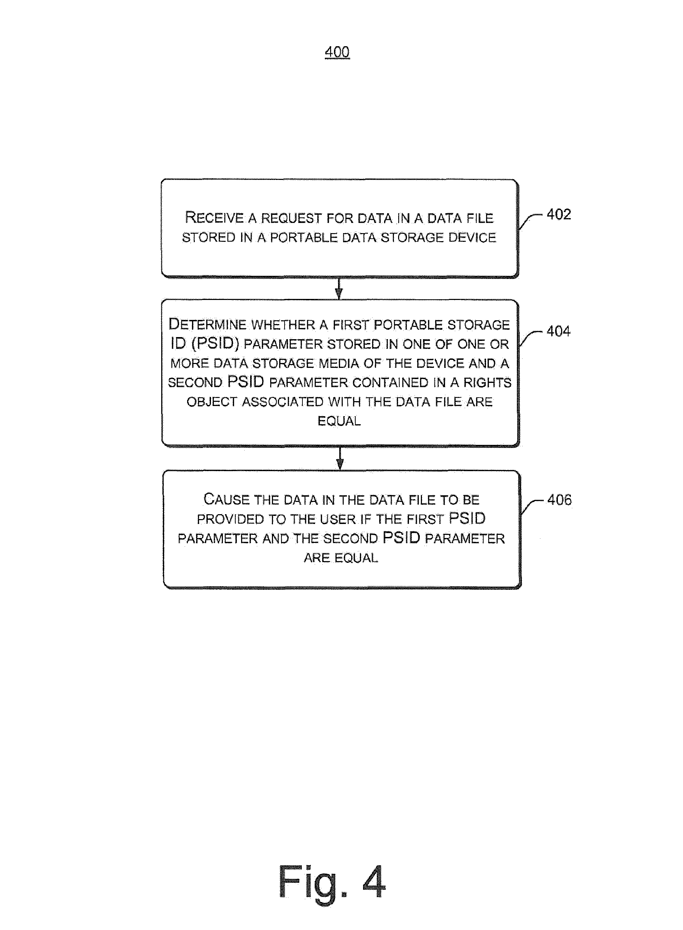

Figure 4 illustrates a process 400 protecting data stored in a portable data storage device in accordance with the present disclosure. At 402, a request is received from a user for data contained in a data file. The data file is stored in one of one or more data storage media of the portable data storage device. At 404, in response to the request, it is determined whether or not a first identification parameter stored in one of the one or more data storage media and a second identification parameter contained in a rights object associated with the data file are equal. At 406, if the first identification parameter and the second identification parameter are determined to be equal, the data in the data file is rendered to be provided to the user.

For example, when a user of the portable data storage device such as an SD memory card desires to view, listen to, or read a video clip/movie, a song/music/speech, or a document stored in the memory of the portable data storage device, the user makes a request to access such data through a data access equipment such as an SD memory card reader, a computer, a digital camera, a digital camcorder, a portable entertainment device or the like. An application on the data access equipment in turn communicates the request to a control logic of the portable data storage device. The control logic then compares a first identification parameter stored in the memory of the portable data storage device and a second identification parameter in the data file which also contains the requested data. If the result of the comparison is positive, that is the first and the second identification parameters are equal, then the control logic allows the data access equipment to access, or read, the requested data to result in the data being output to the user.

In one embodiment, at least one of the first identification parameter or the second identification parameter is encrypted, and the first identification parameter, the second identification parameter, or both the first and the second identification parameters are decrypted before it is determined whether or not the first identification parameter and the second identification parameter are equal.

In one embodiment, the data contained in the data file is encrypted with the PKI using a 1024-bit key before the data is provided to the user. Alternatively, the method may further encrypt the data contained in the data file with the Advanced Encryption Standard (AES) before providing the data to the user. This is believed to provide a strong protection of the data being transferred to and from the portable data storage device.

In one embodiment, when the one or more data storage media include a protection section that stores one or more instruction codes, a partition table section that stores a partition table, a data file section that stores the data file, and a control logic section that stores a control logic which controls operations of the portable data storage device, the first identification parameter is stored in the control logic section. In another embodiment, the first identification parameter is stored in the protection section. In yet another embodiment, the first identification parameter is stored in the partition table section. In still another embodiment, the first identification parameter is stored in the data file section.

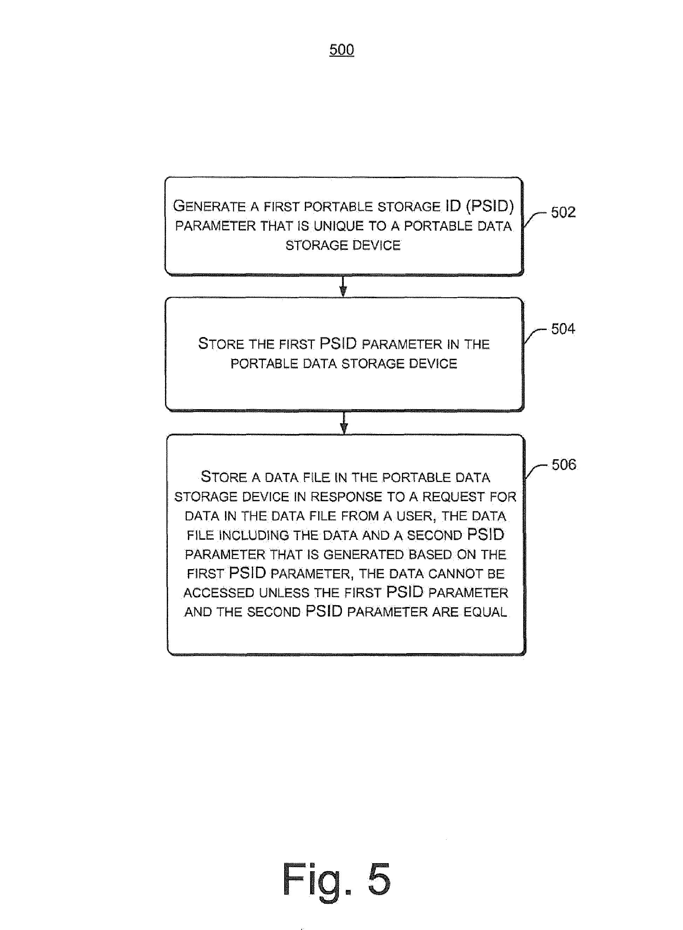

Figure 5 illustrates a process 500 protecting data stored in a portable data storage device in accordance with the present disclosure. At 502, a first identification parameter that is unique to the portable data storage device is generated. At 504, the first identification parameter is stored in one of one or more data storage media of the portable data storage device. At 506, a data file is stored in one of the one or more data storage media in response to a request for data in the data file from a user of the portable data storage device. The data file includes data and a rights object that contains a second identification parameter. The second identification parameter is generated based on the first identification parameter such that the data in the data file cannot be accessed unless the second identification parameter matches the first identification parameter.

For example, the first identification parameter can be generated and stored in the memory of the portable data storage device, such as an SD memory card, during the manufacturing process of the portable data storage device. When one or more data files are stored in the portable data storage device, whether as a part of the manufacturing process or at a later time when a user legitimately downloads the one or more data files via purchase for instance, each of the one or more data files comes with a respective rights object that defines the access rights granted to the data in the corresponding data file. The rights object also contains the second identification parameter. If the one or more data files are acquired by the user through legitimate means, then the second identification parameter should equal to the first identification parameter and hence the data content of the respective data file can be accessed by the user.

In one embodiment, the first identification parameter is generated using a memory serial number that is unique to the one of one or more data storage media, a random number generated by a true random number generator, or both of the memory serial number and the random number.

In one embodiment, when storing the data file in the one of the one or more data storage media, the data file is encrypted with the PKI using a 1024-bit key before transferring the data file to the portable data storage device. Alternatively, when storing the data file in the one of the one or more data storage media, the data file is encrypted with the AES before transferring the data file to the portable data storage device.

In one embodiment, a correlation between the first identification parameter and at least one of a device serial number that is unique to the portable data storage device or the memory serial number is stored in a database. For example, a lookup table may be created in the database showing that the first identification parameter corresponds to either or both of the portable data storage device serial number and the memory serial number. This allows a lookup of the first identification parameter by searching the portable data storage device serial number or the memory serial number, depending on which is provided in the lookup table.

In one embodiment, the rights object is generated in response to the request for the data file by first locating the first identification parameter in the database using at least one of the device serial number or the memory serial number in a database, and then including the first identification parameter in the rights object as the second identification parameter.

For example, when a user of the portable data storage device purchases a movie or song to download the movie or song onto the portable data storage device, the rights object is generated and downloaded to the portable data storage device as a part of the data file that includes the purchased movie or song. The right objects contains an identification parameter which is the first identification parameter stored in the database, and the first identification parameter is found in the database by searching the portable data storage device serial number, the memory serial number, or both.

Accordingly, since the move or song is acquired legitimately through a purchase, the second identification parameter contained in the rights object is the same as the first identification parameter. The control logic will consequently allow the movie or song to be played when the user so chooses to since a comparison of the first and the second identification parameters are equal in this case. On the other hand, if the data file containing the movie or song as well as the rights object is copied onto another portable data storage device that has a different, or third, identification parameter of its own, then a user of that portable data storage device will not be allowed to access, or play, the movie or song. This is because the second identification parameter in the rights object is not equal to the third identification object stored in that portable data storage device.

### Conclusion

The above-described techniques pertain to secure data storage and transfer with respect to portable data storage devices. Although the techniques have been described in language specific to structural features and/or methodological acts, it is to be understood that the appended claims are not necessarily limited to the specific features or acts described. Rather, the specific features and acts are disclosed as exemplary forms of implementing such techniques. Furthermore, although the techniques may have been described in the context of SD memory cards, the techniques may be applied in any other suitable context, such as other types of portable data storage devices, for example.

## Claims

1. A portable data storage device, comprising:
a first portable storage identification (PSID) parameter unique to the portable data storage device;
one or more data storage media in which the first PSID parameter is stored, the one or more data storage media including a data file section to store therein a data file that includes data and a rights object, the rights object containing a second PSID parameter;
a communication port; and
control logic communicatively coupled to the communication port and the one or more data storage media to control access to the one or more data storage media by a user through the communication port, the control logic determining whether or not the first PSID parameter and the second PSID parameter are equal and, if the first PSID parameter and the second PSID parameter are equal, causing the data in the data file to be provided to the user in response to a request for the data by the user.

2. The device of claim 1, wherein the one or more data storage media include at least a memory serial number that is unique to the one or more data storage media, and wherein the first PSID parameter comprises an identification parameter generated from the memory serial number, a random number generated by a true random number generator, or a combination thereof, and wherein the first PSID parameter is stored in the portable data storage device using a one-time programming mechanism.

3. The device of claim 1, wherein at least one of the first PSID parameter or the second PSID parameter is encrypted, and wherein the control logic decrypts the first PSID parameter, the second PSID parameter, or both the first and the second PSID parameters before determining whether or not the first PSID parameter and the second PSID parameter are equal.

4. The device of claim 1, wherein the control logic encrypts data before the data is provided to the user, and wherein the control logic decrypts new data received to be stored in the one or more data storage media before storing the new data in the one or more data storage media.

5. The device of claim 4, wherein the control logic encrypts and decrypts based on the Public Key Infrastructure (PKI) using a 1024-bit key.

6. The device of claim 4, wherein the control logic encrypts and decrypts based on the Advanced Encryption Standard (AES).

7. The device of claim 1, wherein the one or more data storage media further include a protection section that stores one or more instruction codes and a partition table section that stores a partition table, and wherein the first PSID parameter is stored in the protection section.

8. The device of claim 1, wherein the one or more data storage media further include a protection section that stores one or more instruction codes and a partition table section that stores a partition table, and wherein the first PSID parameter is stored in the partition table section.

9. The device of claim 1, wherein the one or more data storage media further include a protection section that stores one or more instruction codes and a partition table section that stores a partition table, and wherein the first PSID parameter is stored in the data file section.

10. The device of claim 1, wherein the one or more data storage media further include a control logic section that stores the control logic, and wherein the first PSID parameter is stored in the control logic section.

11. A method for protecting data stored in a portable data storage device, the method comprising:
receiving a request from a user for data in a data file that is stored in one of one or more data storage media of the portable data storage device;
determining whether or not a first portable storage identification (PSID) parameter stored in one of the one or more data storage media and a second PSID parameter contained in a rights object associated with the data file are equal; and
causing the data in the data file to be provided to the user when it is determined that the first PSID parameter and the second PSID parameter are equal.

12. The method of claim 11, wherein at least one of the first PSID parameter or the second PSID parameter is encrypted, and wherein the method further comprises:
decrypting the first PSID parameter, the second PSID parameter, or both the first and the second PSID parameters before determining whether or not the first PSID parameter and the second PSID parameter are equal.

13. The method of claim 11, further comprising:
encrypting the data contained in the data file with the Public Key Infrastructure (PKI) using a 1024-bit key before providing the data to the user.

14. The method of claim 11, further comprising:
encrypting the data contained in the data file with the Advanced Encryption Standard (AES) before providing the data to the user.

15. The method of claim 11, wherein the one or more data storage media include a protection section that stores one or more instruction codes, a partition table section that stores a partition table, a data file section that stores the data file, and a control logic section that stores a control logic which controls operations of the portable data storage device, and wherein the method further comprises:
storing the first PSID parameter in the control logic section.

16. A method for protecting data stored in a portable data storage device, the method comprising:
generating a first portable storage identification (PSID) parameter that is unique to the portable data storage device;
storing the first PSID parameter in one of one or more data storage media of the portable data storage device; and
storing a data file in one of the one or more data storage media in response to a request for data in the data file from a user of the portable data storage device, the data file including the data and a rights object that contains a second PSID parameter, the second PSID parameter generated based on the first PSID parameter such that the data in the data file cannot be accessed unless the second PSID parameter matches the first PSID parameter.

17. The method of claim 16, wherein generating the first PSID parameter comprises generating the first PSID parameter using a memory serial number that is unique to the one of one or more data storage media, a random number generated by a true random number generator, or a combination thereof.

18. The method of claim 16, wherein the one or more data storage media of the portable data storage device include a control logic section that stores control logic of the portable data storage device, a protection section that stores one or more instruction codes, a partition table section that stores a partition table, and a data file section that stores one or more data files, and wherein storing the first PSID parameter in one of the one or more data storage media comprises storing the first PSID parameter in the control logic section, a system area of the control logic section, the protection section, the partition table section, the data file section, or a combination thereof.

19. The method of claim 16, wherein storing the data file in the one of the one or more data storage media comprises encrypting the data file with the Public Key Infrastructure (PKI) using a 1024-bit key or the Advanced Encryption Standard (AES) before transferring the data file to the portable data storage device.

20. The method of claim 16, further comprising:
storing a correlation between the first PSID parameter and at least one of a device serial number that is unique to the portable data storage device or the memory serial number in a database; and
generating the rights object in response to the request for the data file by:
locating the first PSID parameter in the database using at least one of the device serial number or the memory serial number, and
including the first PSID parameter in the rights object as the second PSID parameter.
